# EUROPÄISCHE PATENTSCHRIFT

(11) **EP 0 992 382 B1**
(45) Veröffentlichungstag und Bekanntmachung des Hinweises auf die Patenterteilung: **23.11.2005**
(21) Anmeldenummer: 99118527.3
(22) Anmeldetag: 18.09.1999
(51) Int. Cl.: B60J 5/04

(54) **Rückhaltevorrichtung für Nutzfahrzeuge**
Restraining device for utility vehicles
Installation de retenue pour véhicules utilitaires

(30) Priorität: 10.10.1998 DE 29818149 U
(43) Veröffentlichungstag der Anmeldung: 12.04.2000
(73) Patentinhaber: Schneider Fahrkomfort GmbH, 68167 Mannheim (DE)
(72) Erfinder: Schneider, Boris Sebastian Heinrich, 69514 Laudenbach (DE)
(74) Vertreter: Sartorius, Peter

(56) Entgegenhaltungen:
- EP-A- 0 233 670
- EP-A- 0 810 324
- JP-A- 10 129 992
- US-A- 4 392 660

## Beschreibung

Die Erfindung betrifft eine Rückhaltevorrichtung für Nutzfahrzeuge, nämlich Gabelstapler, Schlepper, Baumaschinen, Landmaschinen oder Kommunalfahrzeuge mit einem Fahrerschutzdach mit Frontholmen und hinteren Holmen, das seitlich offen ist, wobei die Rückhaltevorrichtung einen in etwa horizontal verlaufenden Träger aufweist, der eine seitliche Öffnung des Fahrerschutzdaches *derart unterteilt*, dass der Träger an dem einen der entsprechenden hinteren und vorderen Holmen an einem Scharnier angelenkt und an dem anderen der entsprechenden hinteren und vorderen Holmen mittels eines Schließsystems gehalten ist. Eine Rückhaltevorrichtung dieser Art ist in EP 0 233 670 A offenbart.

Ein solches Rückhaltesystem ist dann erforderlich, wenn das Fahrerschutzdach für das Ein- und Aussteigen des Fahrers keine seitliche Stahltür aufweist. Bekannt sind Haltegurte, die an entsprechenden Befestigungspunkten des Fahrzeuges montiert werden. Der wesentliche Nachteil dieser bekannten Einrichtung besteht darin, dass der Gurt vom Fahrer angelegt werden muss, was jedoch in vielen Fällen aufgrund der ungünstigen Handhabbarkeit solcher Haltegurte unterbleibt. Bei solchen Fahrzeugen muss der Fahrer häufig das Fahrzeug verlassen und wieder einsteigen, so dass derartige Handhabungen zeitaufwendig sind. Ein weiterer wesentlicher Nachteil besteht darin, dass für die Anbringung solcher Haltegurte besondere Befestigungspunkte notwendig sind, was konstruktive Veränderungen an der Motorhaube bedingt.

Der Erfindung liegt die Aufgabe zugrunde, ein einfach wirksames Rückhaltesystem vorzuschlagen, das eine einfache Handhabbarkeit gewährleistet.

Die Aufgabe wird nach der Erfindung dadurch gelöst, dass mindestens ein teilweise mit Abstand zum Träger verlaufender Bügel vorgesehen ist und der Bügel am Träger befestigt ist.

Eine vorteilhafte Ausführungsform sieht vor, daß zwei im Abstand zum Träger verlaufende Bügel vorgesehen sind.

Weiterhin ist es vorteilhaft, daß der Träger und die Bügel zum selbsttätigen Schließen mittels einer schrägen Scharnierbefestigung an dem einen Holm angeordnet sind.

Es wird weiterhin vorgeschlagen, daß das Scharnier in die seitliche Öffnung des Fahrerschutzdaches hineinragt.

Schließlich ist es vorteilhaft, daß als Schließsystem ein Schnappriegel, ein Drehfallschloß oder dergleichen vorgesehen ist.

Die Erfindung wird in der nachfolgenden Beschreibung anhand eines in der Zeichnung dargestellten Ausführungsbeispiels näher erläutert.

Es zeigen,

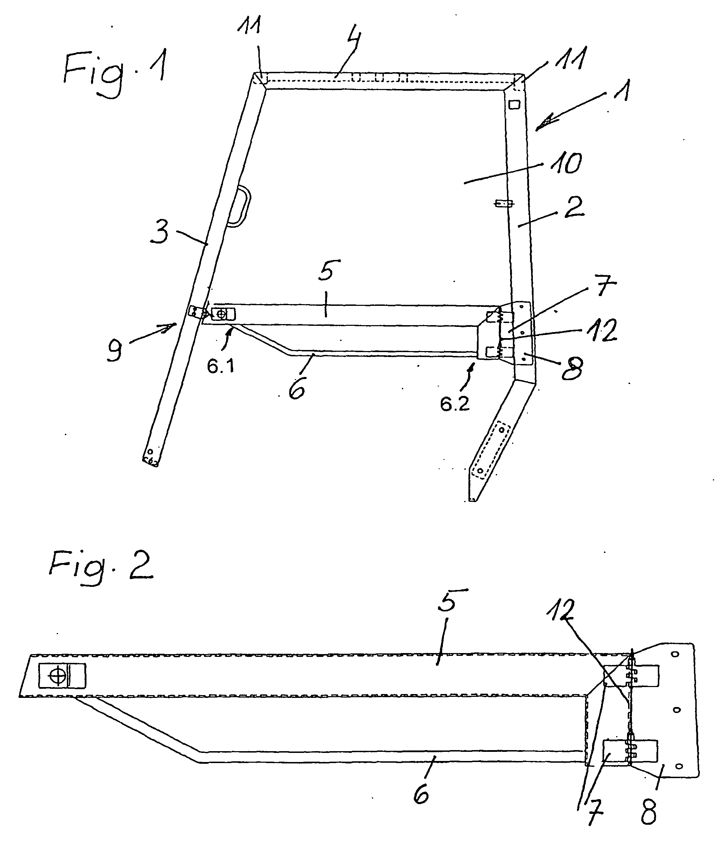

- Fig. 1: eine Seitenansicht eines Fahrerschutzdaches für einen Gabelstapler,
- Fig. 2: eine Seitenansicht der Bügel des Rückhaltesystems und
- Fig. 3: eine Seitenansicht des Fahrerschutzdaches für einen Gabelstapler mit einer weiteren Ausführungsform für das erfindungsgemäße Rückhaltesystem.

Das Fahrerschutzdach 1 besteht aus rahmenartig miteinander verbundenen Holmen, wobei eine seitliche Öffnung 10 von einem Rahmen gebildet wird, bestehend aus dem Dachkorb 4 mit Querholmen 11 und einem hinteren Holm 2 und einem Frontholm 3.

Im unteren Drittel der seitlichen Öffnungen 10 in den Rahmen des Fahrerschutzdaches 1 - an der gegenüberliegenden Seite, verbunden durch die Querholme 11 befindet sich ein entsprechender Rahmen - ist das Rückhaltesystem angeordnet. Dieses Rückhaltesystem besteht aus einem Querträger 5 und einem unteren Bügel 6, die im Abstand zueinander verlaufen. Hierbei hat der Querträger 5 auch die Funktion als Träger für eine "Leichttür" und für Ausstattungszubehör, wie zum Beispiel Flaschenhalter, Verwendung zu finden. Diese Teile 5, 6 weisen ein Rohrprofil auf. Der gegenüber dem unteren Bügel 6 verbreiterte Träger 5 gewährleistet einen entsprechenden Halt für den Fahrer gegen Herausfallen, insbesondere bei Unfällen und der untere Bügel 6 verhindert insbesondere ein Durchrutschen der Person. Der Träger 5 und der Bügel 6 sind im Bereich des hinteren Holms 2 an einem Scharnier 7 angebracht und weisen an der gegenüberliegenden Seite zum Frontholm 3 ein Schließsystem 9 auf, das z.B. als Schnappriegel- oder Drehfallschloß ausgebildet sein kann. Die Teile 5, 6 verlaufen in etwa parallel zum Dachkorb 4.

Das Scharnier 7 weist eine Scharnierbefestigung 8 auf, die entsprechend dem hinteren Holm 2 etwas schräg nach oben hin verläuft, so daß die Schwenkachse 12 für die Teile 5, 6 ebenfalls schräg verläuft und damit die Teile 5, 6 selbsttätig zufallen. Gegebenenfalls kann dies auch mit Hilfe einer Gasfeder oder einer ähnlichen Einrichtung bewerkstelligt werden.

Um den Öffnungswinkel der Teile 5, 6 zu verringern, kann das Scharnier auch so ausgebildet sein, daß es in einen Teil der Öffnung 10 hineinragt, so daß die Schwenkachse 12 gegen den Frontholm 3 verschoben ist.

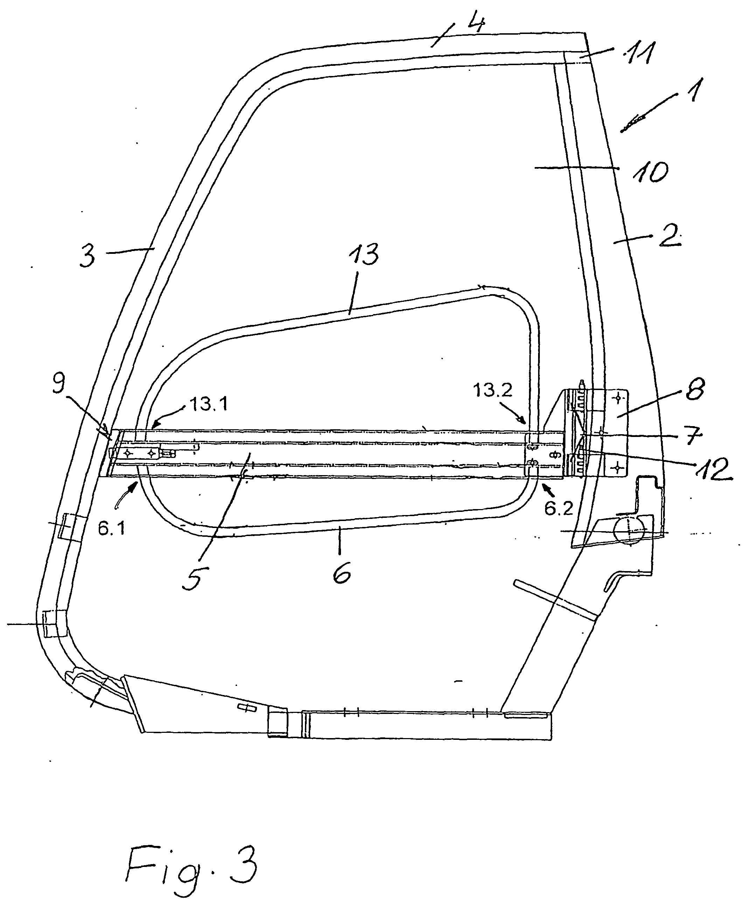

Bei dem in Figur 3 gezeigten Ausführungsbeispiel ist zusätzlich zu dem unteren Bügel 6 ein oberer Bügel 13 vorgesehen, der ebenso wie der untere Bügel 6 mit seinen Enden (13.1, 13.2) an dem Querträger 5 befestigt ist. Dieser Bügel 13 reicht in etwa bis zur halben Höhe zwischen dem Dach 4 und dem Träger 5 und bewirkt damit einen besonders guten Schutz für den Fahrer des Fahrzeuges.

## Patentansprüche

1. Rückhaltevorrichtung für Nutzfahrzeuge, nämlich Gabelstapler, Schlepper, Baumaschinen, Landmaschinen oder Kommunalfahrzeuge mit einem Fahrerschutzdach (1) mit Frontholmen (3) und hinteren Holmen(2), das seitlich offen ist, wobei die Rückhaltevorrichtung einen in etwa horizontal verlaufenden Träger (5) aufweist, der eine seitliche Öffnung (10) des Fahrerschutzdaches (1) derart unterteilt, dass der Träger (5) an dem einen der entsprechenden hinteren und vorderen Holmen (2, 3) an einem Scharnier (7) angelenkt und an dem anderen der entsprechenden hinteren und vorderen Holmen (2, 3) mittels eines Schließsystems (9) gehalten ist,
**dadurch gekennzeichnet,**
**dass** mindestens ein teilweise mit Abstand zum Träger (5) verlaufender Bügel (6) vorgesehen ist und der Bügel (6) am Träger (5) befestigt ist.

2. Vorrichtung nach Anspruch 1
**dadurch gekennzeichnet,**
**dass** ein zweiter Bügel (13) vorgesehen ist, der teilweise mit Abstand zum Träger (5) verläuft, wobei der Bügel (6) mit seinen Enden (6.1, 6.2) und/oder der zweite Bügel (13) mit seinen Enden (13.1, 13.2) am Träger (5) befestigt ist.

3. Vorrichtung nach Anspruch 1 oder 2,
**dadurch gekennzeichnet,**
**dass** der Träger (5) und der bzw. die Bügel (6, 13) zum selbsttätigen Schließen mittels einer schrägen Scharnierbefestigung (8) an dem Holm (2) angeordnet sind.

4. Vorrichtung nach einem der vorhergehenden Ansprüche,
**dadurch gekennzeichnet,**
**dass** das Scharnier (7) in die seitliche Öffnung (10) des Fahrerschutzdachs (1) hineinragt.

5. Vorrichtung nach einem der vorhergehenden Ansprüche,
**dadurch gekennzeichnet,**
**dass** als Schließsystem (9) ein Schnappriegel, ein Drehfallschloss oder dergleichen vorgesehen ist.

6. Vorrichtung nach einem der vorhergehenden Ansprüche 2 bis 5,
**dadurch gekennzeichnet,**
**dass** der Abstand des Zweiten Bügels (13) zum Träger (5) etwa der halben Höhe zwischen dem Träger (5) und dem Dachkorb (4) entspricht.

7. Vorrichtung nach einem der vorhergehenden Ansprüche,
**dadurch gekennzeichnet,**
**dass** der Träger (5) mittels einer Gasfeder selbsttätig schließt.

8. Vorrichtung nach einem der vorhergehenden Ansprüche,
**dadurch gekennzeichnet,**
**dass** der bzw. die Bügel (6, 13) aus einem Rohrprofil gebildet sind.

## Claims

1. Restraining device for utility vehicles (fork lift trucks, tractors, building machinery, agricultural machinery, or street cleansing vehicles) having a laterally open driver's cab shield (1) with front spars (3) and rear spars (2), wherein said restraining device comprises an approximately horizontal beam (5) that subdivides a side opening (10) of the driver's cab shield (1) in such a manner that the beam (5) is linked with a hinge (7) arranged on one of the respective rear and front spars (2, 3) and that the beam is held by means of a closing system (9) arranged on the other one of the respective rear and front spars (2, 3),
**characterized in that**
at least one stirrup (6) is provided that is partially spaced apart from the beam (5) and that the stirrup (6) is attached to the beam (5).

2. Device according to claim 1,
**characterized in that**
a second stirrup (13) is provided that is partially spaced apart from the beam (5), wherein the stirrup (6) is attached to the beam (5) via its ends (6.1, 6.2) and/or the second stirrup (13) is attached to the beam (5) via its ends (13.1, 13.2).

3. Device according to claim 1 or 2,
**characterized in that**
the beam (5) and the stirrup/the stirrups (6, 13), for the purpose of automatic closing, are arranged on the spar (2) by means of an inclined hinge-fixing device (8).

4. Device according to any one of the preceding claims,
**characterized in that**
the hinge (7) projects into the side opening (10) of the driver's cab shield (1).

5. Device according to any one of the preceding claims,
**characterized in that**
the provided closing system (9) is a latch, a twistlock, or the like.

6. Device according to any one of the preceding claims 2 to 5,
**characterized in that**
the distance between the second stirrup (13) and the beam (5) corresponds to approximately half the distance between the beam (5) and the roof basket (4).

7. Device according to any one of the preceding claims,
**characterized in that**
the beam (5) closes automatically by means of a pneumatic spring.

8. Device according to any one of the preceding claims,
**characterized in that**
the stirrup/the stirrups (6, 13) is/are made up of a tubular profile.

## Revendications

1. Dispositif de retenue pour véhicules utilitaires, c'est-à-dire des chariots élévateurs à fourche, des tracteurs, des engins de chantier, des machines agricoles ou des véhicules urbains avec un toit de protection du conducteur (1) avec des montants avant (3) et des montants arrière (2), qui est ouvert sur les côtés, où le dispositif de retenue présente un support (5) disposé de façon approximativement horizontale, qui sépare en deux une ouverture latérale (10) du toit de protection du conducteur (1) de telle sorte que le support (5) est articulé sur une charnière (7) sur un des montants correspondants avant et arrière (2, 3) et est maintenu sur un des montants correspondants avant et arrière (2, 3) au moyen d'un système de fermeture (9)
**caractérisé en ce que**,
au moins un cintre (6) disposé en partie à distance du support (5) est prévu et que le cintre (6) est fixé au support (5).

2. Dispositif selon la revendication 1,
**caractérisé en ce que**
un deuxième cintre (13) est prévu, qui est disposé en partie à distance du support (5), où le cintre (6), par ses extrémités (6.1, 6.2), et/ou le deuxième cintre (13), par ses extrémités (13.1, 13.2), est fixé au support (5).

3. Dispositif selon les revendications 1 ou 2,
**caractérisé en ce que**
le support (5) et les cintres (6, 13) sont placés sur le montant (2) au moyen d'une fixation de charnière (8) oblique pour la fermeture automatique.

4. Dispositif selon l'une des revendications précédentes,
**caractérisé en ce que**
la charnière (7) dépasse dans l'ouverture latérale (10) du toit de protection du conducteur (1).

5. Dispositif selon l'une des revendications précédentes,
**caractérisé en ce qu'**
un verrou à ressort, un loquet ou équivalent est prévu comme système de fermeture (9).

6. Dispositif selon l'une des revendications 2 à 5,
**caractérisé en ce que**
la distance du deuxième cintre (13) au support (5) correspond à la moitié de la hauteur entre le support (5) et la partie supérieure du toit (4).

7. Dispositif selon l'une des revendications précédentes,
**caractérisé en ce que**
le support (5) se ferme automatiquement au moyen d'un ressort à gaz.

8. Dispositif selon l'une des revendications précédentes,
**caractérisé en ce que**
le cintre ou les cintres (6, 13) sont formés dans un profil tubulaire.
